# EUROPÄISCHE PATENTANMELDUNG

(11) **EP 3 112 732 A1**
(43) Veröffentlichungstag der Anmeldung: **04.01.2017**
(21) Anmeldenummer: 15174944.7
(22) Anmeldetag: 02.07.2015
(51) Int. Cl.: F16K 17/16, F16K 31/06

(54) **BERSTSCHEIBENANORDNUNG MIT EINER BERSTSCHEIBE UND EINEM AKTUATOR**

(71) Anmelder: Rembe GmbH Safety + Control, 59929 Brilon (DE)
(72) Erfinder: Bunse, Roland, 59929 Brilon (DE); Penno, Stefan, 59929 Brilon (DE)
(74) Vertreter: Schäperklaus, Jochen

(57) **Zusammenfassung**

Die Erfindung betrifft eine Berstscheibenanordnung mit einem ein- oder mehrteiligen Körper (1), der eine Öffnung aufweist, die einen Auslass für eine Leitung oder einen Behälter bildet, mit einer Berstscheibe (2), welche die Öffnung verschließt und welche bei einer Beaufschlagung mit einem Berstdruck birst, um die Öffnung durchlässig zu machen, wobei die Berstscheibenanordnung einen Aktuator (3) aufweist, mittels dem der Berstdruck herabsetzbar ist.

## Beschreibung

Die vorliegende Erfindung betrifft eine Berstscheibenanordnung mit einem ein- oder mehrteiligen Körper, der eine Öffnung aufweist, die einen Auslass für eine Fluidleitung oder einen Behälter oder einem anderen Gebilde bilden kann, mit einer Berstscheibe, welche die Öffnung verschließt und welche bei einer Beaufschlagung mit einem definierten Druck (nominaler Berstdruck) birst, um die Öffnung freizugeben.

Berstscheibenanordnungen begegnet man häufig in Industrieanlagen, um Fluidleitungen oder Behälter aller Art gegen unzulässige Drücke sowie Explosionen zu schützen. Berstscheiben schaffen in den Leitungen oder Behältern oder anderen Gebilden Sollbruchstellen, an denen die Leitungen oder Behälter oder die anderen Gebilde öffnen, falls der Druck in den Leitungen oder Behältern oder den anderen Gebilden so ansteigt, dass ein unkontrolliertes Bersten der Leitungen oder Behälter oder der anderen Gebilde zu erwarten ist. Durch die bei einem Nennberstdruck öffnenden Berstscheiben wird dann ein kontrolliertes Entlüften oder eine kontrollierte Druckentlastung der Leitungen oder Behälter oder der anderen Gebilde möglich.

Berstscheibenanordnungen weisen in der Regel einen Körper auf, der auf mannigfaltige Art gestaltet sein kann. Er kann monolithisch oder aus mehreren Teilen hergestellt sein. Der Körper kann Teil der abzusichernden Leitung oder des abzusichernden Behälters sein. Der Körper hat eine Öffnung, welche einen Auslass der abzusichernden Leitung oder des abzusichernden Behälters bildet, über die im Falle des Erreichens des nominalen Berstdrucks eine Druckentlastung stattfinden und das in der Leitung oder dem Behälter gelagerte Fluid entweichen kann. Diese Öffnung ist im Normalbetrieb durch eine Berstscheibe verschlossen, die dazu an dem Körper befestigt ist.

Der nominale Berstdruck (auch Ansprechdruck) einer Berstscheibe hängt von vielen Merkmalen der Berstscheibe ab. Zu nennen sind dabei vor allen Dingen die äußere Struktur, zum Beispiel die geometrischen Merkmale der Berstscheibe (die Dicke, die Länge und Breite oder der Durchmesser der Berstscheibe, Wölbungen, Einschnitte in der Berstscheibe durch Materialabtrag usw.) oder das verwendete Material. Wichtige Faktoren sind neben dem gewählten Material auch die innere Struktur des Materials, zum Beispiel die Mikrostruktur des Materials die zum Beispiel durch lokale Verformungen verändert sein kann, wie zum Beispiel in dem Dokument DE 10 2007 022 018 A1 beschrieben ist. Der nominale Berstdruck kann auch durch Knickstäbe eingestellt werden

Berstscheiben haben sich in der Vergangenheit millionenfach bewährt und Anlagen, Tiere und Menschen vor großen Schäden und Katastrophen bewahrt. Dennoch können auch in den Fällen, in denen es zum Öffnen einer Berstscheibe kommt, Schäden entstehen.

In einigen dieser Fälle kann es wünschenswert sein, wenn ein Öffnen der Berstscheibe bei einem Druck erfolgen könnte, der niedriger ist als der nominale Berstdruck, zum Beispiel um die Hälfte niedriger ist als der nominale Berstdruck. Ein Öffnen der Berstscheibe bei niedrigerem Druck ist aber in diesen Fällen nicht möglich, da auch während eines störungsfreien Betriebs der Leitung oder des Behälters Drücke erreicht werden können, die - um bei dem Beispiel zu bleiben - höher sind als die Hälfte des nominale Berstdrucks. Daher können in diesen Fällen keine Berstscheiben verwendet werden, die einen niedrigeren nominalen Berstdruck haben.

Der Erfindung lag daher die Aufgabe zu schaffen, eine Berstscheibenanordnung so einzurichten, dass ein Öffnen der Berstscheibe auch bei einem niedrigerem Berstdruck erfolgen kann, wenn es gewünscht, die aber in jedem Fall bei Erreichen des nominalen Berstdrucks öffnen.

Diese Aufgabe wird erfindungsgemäß dadurch gelöst, dass die Berstscheibenanordnung einen Aktuator aufweist, mittels dem der Berstdruck herabsetzbar ist. Mittels des Aktuators kann dann der Berstdruck der Berstscheibe selektiv so herabgesetzt werden, dass die Berstscheibe auch bei einem Druck öffnet, der geringer ist als der Nennberstdruck. Damit kann die durch die Berstscheibenanordnung abgesicherte Leitung oder der durch die Berstscheibenanordnung abgesicherte Behälter oder das abgesicherte Gebilde auch bei einem Druck entlastet werden, der geringer ist als der nominale Berstdruck. Gleichzeitig kann die Berstscheibe aber zumindest bis zum Herabsetzen des Berstdrucks bei Drücken betrieben werden, die höher sind als der Druck, auf den der Berstdruck durch den Einfluss des Aktuators herabgesetzt werden kann.

Die Herabsetzung des Berstdrucks der Berstscheibe kann irreversibel oder reversibel erfolgen. Reversibel bedeutet, dass der Berstdruck ggf. auch wieder auf den Nennberstdruck heraufgesetzt werden kann, wenn eine Entlüftung oder eine Druckentlastung bei einem geringeren Druck als dem nominalen Berstdruck nicht mehr erwünscht ist. Irreversibel bedeutet, dass der Berstdruck einmalig herabgesetzt wird und dann nicht wieder erhöht werden kann. Soll der Berstdruck der Berstscheibenanodnung wieder erhöht werden, muss dann die Berstscheibenanordnung oder zumindest die Berstscheibe ausgetauscht werden.

Gemäß der Erfindung kann die Berstscheibenanordnung so gestaltet sein, dass der Berstscheibe mittels dem Aktuator stoßartig Energie zuführt werden kann. Insbesondere durch das stoßartige Zuführen von Energie ist es möglich, das Verhalten der Berstscheibe schnell zu beeinflussen und den Nennberstdruck zu beeinflussen. Bei der zugeführten Energie kann es sich um kinetische, elektrische, und/oder thermische Energie handeln. Handelt es sich kinetische Energie, kann diese zum Beispiel durch Zugkräfte oder Druckkräfte auf die Berstscheibe übertragen werden.

Vorzugsweise wird durch den Aktuator der Berstdruck ohne Zerstörung der Berstscheibe herabgesetzt, denn nur wenn die Berstscheibe unzerstört bleibt, kann noch ein Bersten der Berstscheibe aufgrund des Drucks in der Leitung oder in dem Behälter erfolgen. Eine Zerstörung der Berstscheibe, zum Beispiel durch eine mechanische Lochung der Berstscheibe durch den Aktuator, hätte eine Herabsetzung des Berstdrucks auf Null zur Folge, die im Lichte der der Erfindung zu Grunde liegenden Aufgabe nicht sinnvoll ist.

In Folge der Herabsetzung des Berstdruckes durch den Aktuator kann es dennoch zu einer sofortigen Zerstörung der Berstscheibe kommen, nämlich dann wenn in der Leitung, dem Behälter oder Gebilde ein Druck herrscht, der über den Berstdruck liegt, auf den der Aktuator den Berstdruck herabsetzt. Die Berstscheibe spricht dann aufgrund der Herabsetzung des Berstdruckes durch den Aktuator sofort an.

Durch den Aktuator einer erfindungsgemäßen Berstscheibenanordnung kann zum Herabsetzen des Berstdrucks zumindest an einer Stelle der Berstscheibe die innere Struktur des Materials, aus dem die Berstscheibe hergestellt ist, und/oder die Geometrie der Berstscheibe, insbesondere die Form der Berstscheibe, reversibel oder irreversibel verändert werden. Die Stelle der Berstscheibe, auf die eingewirkt wird, kann z. B. bei einer Berstscheibe mit einem Durchmesser von 142 mm, einer Blechstärke von 0,8 und einer Wölbung mit einer Tiefe von 23,5 mm einen Durchmesser von 2,7 mm haben.

Der Aktuator einer erfindungsgemäßen Berstscheibenanordnung kann eine Stange und einen Antrieb aufweisen, wobei die Stange von dem Antrieb angetrieben werden kann, um bei einem Einschalten des Antriebs durch einen Schlag der Stange oder durch einen Zug der Stange Energie auf die Berstscheibe zu übertragen.

Die Stange kann eine erste Fläche haben, welche im ausgeschalteten Zustand des Antriebs mit einem Abstand zur Berstscheibe angeordnet ist und im eingeschalteten Zustand, insbesondere während der Ausführung des Schlags, an der Berstscheibe anliegt. Ebenso ist es möglich, dass die erste Fläche im ausgeschalteten Zustand des Antriebs an der Berstscheibe anliegt, während im eingeschalteten Zustand die erste Fläche der Stange von der Berstscheibe entfernt wird, wodurch sich die innere oder die äußere Struktur der Berstscheibe ändert.

Bei dem Antrieb kann es sich um einen elektrischen Antrieb handeln. Pneumatische oder hydraulische Antriebe können auch verwendet werden. Der Antrieb kann einen Elektromagneten umfassen.

Die von einem Antrieb aufgebrachte Kraft kann bei dem schon zuvor genannten Beispiel einer Berstscheibe von 142 mm Durchmesser bis 2300 N betragen. Es kann eine Energie von 3,43 J eingebracht werden.

In einer erfindungsgemäßen Berstscheibenanordnung kann der Aktuator so angeordnet sein, dass eine Stelle der Berstscheibe, auf welche die Stange beim Einschalten des Antriebs schlägt oder an welcher die Stange beim Einschalten des Antriebs zieht zwischen einem Mittelpunkt der Berstscheibe und einem Rand der Berstscheibe liegt. Die Stelle kann auch dem Mittelpunkt entsprechen. Versuche haben gezeigt, dass bei einer runden Umkehrberstscheibe der Berstdruck umso mehr herabgesetzt werden kann, je mehr die Stelle, auf welche die Stange einwirkt, in der Nähe des Mittelpunkts liegt. Durch die Wahl der Stelle entlang eines Radius ließe sich im Versuch die Herabsetzung des Berstdrucks bestimmen.

Eine erfindungsgemäße Berstscheibenanordnung kann eine Steuerung aufweisen, die einen Ausgang hat, die mit einem Schalteingang des Antriebs verbunden ist und mit welcher der Aktuator steuerbar ist. Eine solche Steuerung kann zumindest einen Eingang für einen Sensor haben, wobei mittels eines Steuerprogramms der Steuerung über den Eingang eingelesene Daten verarbeitet werden können. Ein Ergebnis der Verarbeitung der eingelesenen Daten kann ein Einschaltsignal sein, welches über den Ausgang der Steuerung und den Schalteingang des Aktuators dem Aktuator zugeführt werden kann, um den Aktuator einzuschalten.

Die in einer erfindungsgemäßen Berstscheibenanordnung verwendete Berstscheibe kann eine Umkehrberstscheibe sein. Grundsätzlich können in einer erfindungsgemäßen Berstscheibenanordnung beliebige Berstscheiben in jeder Form verwendet werden, zum Beispiel zugbelastete Berstscheiben, Umkehrberstscheiben, Knickstab-Umkehrberstscheiben, flache Berstscheiben, usw.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine schematische Darstellung einer erfindungsgemäßen Berstscheibenanordnung von oben und
- Fig. 2: eine schematische Darstellung der erfindungsgemäßen Berstscheibenanordnung von der Seite.

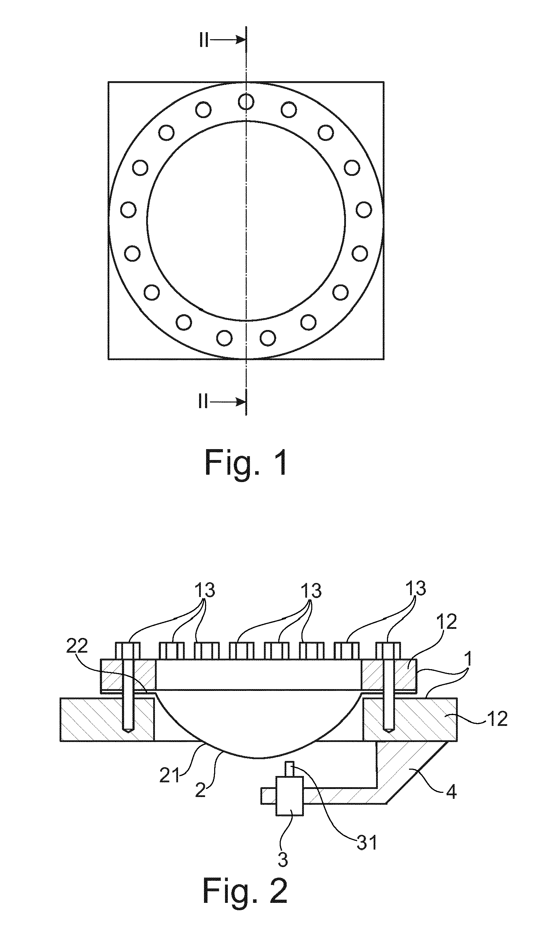

Die in den Figuren 1 und 2 schematisch dargestellte Berstscheibenanordnung weist einen mehrteiligen Körper 1 auf. Dieser umfasst eine Platte 12 mit einer Öffnung als erstes Teil. Die Platte kann Teil einer Wand, einer Leitung oder eines Behälters sein. Die Öffnung der Platte 12 ist mit einer Umkehrberstscheibe 2 verschlossen. Die Berstscheibe 2 ist mittels eines Rings 12, der ein zweites Teil des Körpers 1 bildet, und Schrauben 13 an der Platte 11 befestigt. Die Schrauben sind dazu durch den Ring 12 und einen Rand 22 der Berstscheibe 2 geführt und in Gewindebohrungen in der Platte eingeschraubt. Die Berstscheibe könnte auch durch Klemmung zwischen der Platte und dem Ring oder auf andere Art befestigt sein.

Die Umkehrberstscheibe ist in Richtung des Inneren des Behälters oder der Leitung gewölbt, um ihn gegen einen Überdruck zu sichern. Soll der Behälter gegen einen Unterdruck gesichert werden, müsste die Umkehrberstscheibe umgekehrt moniert werden. Die Berstscheibe 2 kann auf herkömmliche Art gestaltet sein. Insbesondere kann die Berstscheibe 2 Rillen oder Schlitze aufweisen, entlang derer die Berstscheibe 2 aufreißt.

Insoweit ist die Berstscheibenanordnung wie eine herkömmliche Berstscheibenanordnung gestaltet.

Die erfindungsgemäße Berstscheibenanordnung umfasst auch einen Aktuator 3. Dieser ist mittels eines Haltearms 4 an der Platte befestigt. Der Haltearm 4 ragt vom Rand der Berstscheibe 2 in Richtung der Mitte der Berstscheibe 2. Am Ende des Arms 4 ist eine Ausnehmung vorgesehen, in welche der Aktuator 3 eingesetzt ist.

Der Aktuator 3 umfasst einen Elektromagneten mit einer Wicklung, in der eine Stange 31 linear verschiebbar gelagert ist. Durch ein Einschalten eines Stroms kann eine Kraft erzeugt werden, die die Stange linear verschiebt. Die Verschiebung erfolgt dabei schlagartig.

Die Stange 31 des Aktuators 3 ragt im ausgeschalteten Zustand des Aktuators 3, d.h. im Zustand ohne Stromfluss durch die Wicklung des Aktuators 3, im rechten Winkel oder nahezu im rechten Winkel in Richtung der Berstscheibe 2 und endet mit einem Abstand zur Berstscheibe 2. Die der Berstscheibe 2 zugewandte Stirnfläche der Stange 31 ist eine erste Fläche, mit welcher die Stange 31 im eingeschaltet Zustand des Aktuators 3 an der Berstscheibe anschlägt.

Die erste Fläche kann flach sein oder konkav oder konvex gewölbt sein.

Durch den Schlag, der mittels des Aktuators 3 gegen eine Stelle der Berstscheibe 2 geführt werden kann, wird zumindest die innere Struktur der Berstscheibe 2 an dieser Stelle verändert. Außerdem kann eine kleine Beule in der Berstscheibe entstehen. Diese Veränderung führt zu einer Herabsetzung des Berstdrucks der Berstscheibe 2. Das bedeutet, dass der Nennberstdruck der Berstscheibe 2 mittels des Aktuators 3 verändert, nämlich herabgesetzt werden kann, um kurzfristig zu erreichen, dass die Berstscheibe bei einem niedrigeren Druck anspricht, nämlich umklappt und aufreißt, um die Öffnung in dem Körper 1 freizugeben und eine im Vergleich zum Nennberstdruck vorzeitige Druckentlastung des abgesicherten Behälters oder der abgesicherten Leitung zu erreichen.

## Patentansprüche

1. Berstscheibenanordnung mit einem ein- oder mehrteiligen Körper (1), der eine Öffnung aufweist, die einen Auslass für eine Leitung oder einen Behälter bildet, mit einer Berstscheibe (2), welche die Öffnung verschließt und welche bei einer Beaufschlagung mit einem Berstdruck birst, um die Öffnung freizugeben,
**dadurch gekennzeichnet, dass**
die Berstscheibenanordnung einen Aktuator (3) aufweist, mittels dem der Berstdruck herabsetzbar ist.

2. Berstscheibenanordnung nach Anspruch 1, **dadurch gekennzeichnet, dass** der Berstscheibe (2) mittels dem Aktuator (3) stoßartig Energie zuführbar ist.

3. Berstscheibenanordnung nach Anspruch 2, **dadurch gekennzeichnet, dass** die Energie kinetische, elektrische, und/oder thermische Energie ist.

4. Berstscheibenanordnung nach einem der Ansprüche 1 bis 3, **dadurch gekennzeichnet, dass** mittels dem Aktuator (3) der Berstdruck ohne Zerstörung der Berstscheibe (2) herabsetzbar ist.

5. Berstscheibenanordnung nach einem der Ansprüche 1 bis 4, **dadurch gekennzeichnet, dass** mittels des Aktuators (3) zum Herabsetzen des Berstdrucks zumindest an einer Stelle der Berstscheibe (2) die innere oder äußere Struktur des Materials, aus dem die Berstscheibe (2) hergestellt ist, und/oder die Geometrie der Berstscheibe (2) reversibel oder irreversibel veränderbar ist.

6. Berstscheibenanordnung nach einem der Ansprüche 1 bis 5, **dadurch gekennzeichnet, dass** der Aktuator (3) eine Stange (31) und einen Antrieb aufweist, wobei die Stange (31) von dem Antrieb antreibbar ist, insbesondere um bei einem Einschalten des Antriebs durch einen Schlag oder durch Zug der Stange (31) Energie auf die Berstscheibe (2) zu übertragen.

7. Berstscheibenanordnung nach Anspruch 6, **dadurch gekennzeichnet, dass** die Stange (31) eine erste Fläche hat, welche im ausgeschalteten Zustand des Antriebs mit einem Abstand zur Berstscheibe (2) angeordnet ist und im eingeschalteten Zustand an der Berstscheibe (2) anliegt oder umgekehrt.

8. Berstscheibenanordnung nach Anspruch 7, **dadurch gekennzeichnet, dass** der Antrieb ein elektrischer Antrieb ist.

9. Berstscheibenanordnung nach Anspruch 8, **dadurch gekennzeichnet, dass** der Antrieb einen Elektromagneten umfasst.

10. Berstscheibenanordnung nach einem der Ansprüche 6 bis 9, **dadurch gekennzeichnet, dass** der Aktuator (3) so angeordnet ist, dass eine Stelle der Berstscheibe (3), auf welche die Stange (31) beim Einschalten des Antriebs einwirkt, dem Mittelpunkt entspricht oder zwischen einem Mittelpunkt der Berstscheibe (2) und einem Rand (22) der Berstscheibe liegt.

11. Berstscheibenanordnung nach einem der Ansprüche 1 bis 10, **dadurch gekennzeichnet, dass** die Berstscheibenanordnung eine Steuerung aufweist, die einen Ausgang hat, die mit einem Schalteingang des Aktuators (3) verbunden ist, und mit welcher der Aktuator (3) steuerbar ist.

12. Berstscheibenanordnung nach Anspruch 11, **dadurch gekennzeichnet, dass** die Steuerung zumindest einen Eingang für einen Sensor hat, wobei mittels eines Steuerprogramms der Steuerung über den Eingang eingelesene Daten verarbeitbar sind.

13. Berstscheibenanordnung nach Anspruch 12, **dadurch gekennzeichnet, dass** ein Ergebnis der Verarbeitung der eingelesenen Daten ein Einschaltsignal ist, welches über den Ausgang der Steuerung und den Schalteingang des Aktuators (3) dem Aktuator (3) zuführbar ist, um den Aktuator (3) einzuschalten.

14. Berstscheibenanordnung nach einem der Ansprüche 1 bis 13, **dadurch gekennzeichnet, dass** die Berstscheibe (2) eine Umkehrberstscheibe oder eine zugbelastete Berstscheibe ist.

15. Verfahren zum Herabsetzen des Berstdrucks einer Berstscheibe (2), mit welcher eine Öffnung eines ein- oder mehrteiligen Körpers (1) einer Berstscheibenanordnung nach einem der Ansprüche 1 bis 14 verschlossen ist,
**dadurch gekennzeichnet, dass**
vor Erreichen eines Nennberstdrucks der Berstscheibe (2) ein Aktuator (3), der manuell oder durch eine Steuerung ausgelöst wird, auf die Berstscheibe einwirkt, um den Berstdruck der Berstscheibe (2) herabzusetzen.
